# EUROPEAN PATENT APPLICATION

(11) **EP 4 645 071 A1**
(43) Date of publication of application: **05.11.2025**
(21) Application number: 23916845.3
(22) Date of filing: 20.01.2023
(51) Int. Cl.: G06F 8/65

(54) **SOFTWARE UPGRADING SYSTEM AND METHOD, DEVICE, AND VEHICLE**

(71) Applicant: Shenzhen Yinwang Intelligent Technologies Co., Ltd., Shenzhen, Guangdong 518110 (CN)
(72) Inventor: YANG, Xuewen, Shenzhen, Guangdong 518129 (CN); QU, Xiaofeng, Shenzhen, Guangdong 518129 (CN)
(74) Representative: Maiwald GmbH
(86) International application number: PCT/CN2023/073397
(87) International publication number: WO 2024/152367

(57) **Abstract**

A software upgrade system and method, a device, and a vehicle are provided. The software upgrade system includes a control apparatus and M control units, where M is a positive integer. The M control units include a first control unit. The control apparatus includes a first partition and a second partition. The first control unit includes a first storage area. A second software version is deployed in the first partition. A first software version is deployed in the second partition. The control apparatus is configured to: receive a third software version; update the first software version in the second partition to the third software version; and send the third software version to the first control unit. The first control unit is configured to update the second software version deployed in the first storage area to the third software version, where the first software version, the second software version, and the third software version are different versions of software corresponding to the first control unit. This improves reliability of software upgrade of a vehicle-mounted device.

## Description

### TECHNICAL FIELD

This application relates to the field of intelligent vehicles, and in particular, to a software upgrade system and method, a device, and a vehicle.

### BACKGROUND

In a process of performing software upgrade on a vehicle based on an over-the-air upgrade technology (over-the-air, OTA), a scenario in which the upgrade is interrupted due to impact of an external factor is inevitable. For example, if upgrade of an electronic control unit (electronic control unit, ECU) of the vehicle is interrupted, the ECU cannot operate due to a software system fault. Therefore, how to improve reliability of software upgrade of a vehicle-mounted device is an urgent problem to be resolved currently.

### SUMMARY

This application provides a software upgrade system and method, a device, and a vehicle, to improve reliability of software upgrade of a vehicle-mounted device.

According to a first aspect, this application provides a software upgrade system, including a control apparatus and M control units, and M is a positive integer. The M control units include a first control unit, the control apparatus includes a first partition and a second partition, and the first control unit includes a first storage area. A second software version is deployed in the first partition, and a first software version is deployed in the second partition. The control apparatus is configured to: receive a third software version; update the first software version in the second partition to the third software version; and send the third software version to the first control unit. The first control unit is configured to: update the second software version deployed in the first storage area to the third software version, where the first software version, the second software version, and the third software version are different versions of software corresponding to the first control unit.

According to the software upgrade system provided in the first aspect, the control apparatus updates the first software version deployed in the second partition to the third software version, and sends the third software version to the first control unit. In a process in which the first control unit updates the second software version deployed in the first storage area to the third software version, the first partition of the control apparatus still maintains the second software version, to ensure that the first control unit can quickly roll back to the second software version after upgrade fails or upgrade is canceled, thereby improving reliability of software upgrade.

In a possible implementation, when sending the third software version to the first control unit, the control apparatus is specifically configured to send the third software version and information about the first storage area to the first control unit.

According to the software upgrade system provided in this implementation, the first control unit may determine a flashing location of the third software version based on the information about the first storage area, thereby improving efficiency of software upgrade.

In a possible implementation, the first control unit further includes a second storage area, and the first control unit is further configured to: update the first software version deployed in the second storage area to the third software version; and switch roles of the first storage area and the second storage area, where the roles include a primary storage area or a secondary storage area.

According to the software upgrade system provided in this implementation, the first storage area and the second storage area are deployed in the first control unit, to implement dual partitions and improve reliability of software upgrade. In addition, the two storage areas respectively correspond to two partitions of the control apparatus, so that the control apparatus synchronizes a software version to the first control unit. This improves processing efficiency.

In a possible implementation, after sending the third software version to the first control unit, the control apparatus is further configured to: detect whether a trigger event exists, where the trigger event is used to trigger rollback of the third software version deployed in the first storage area to the second software version; and send the second software version to the first control unit when the trigger event exists. The first control unit is further configured to: receive the second software version; and roll back the third software version deployed in the first storage area to the second software version.

According to the software upgrade system provided in this implementation, when the trigger event exists, the control apparatus sends the second software version to the first control unit, so that the first control unit quickly rolls back the third software version to the second software version.

In a possible implementation, after sending the third software version to the first control unit, the control apparatus is further configured to: detect whether a trigger event exists, where the trigger event is used to trigger rollback of the third software version deployed in the first storage area to the second software version; and send indication information to the first control unit when the trigger event exists, where the indication information indicates to roll back the third software version deployed in the first storage area to the second software version. The first control unit is further configured to switch the roles of the first storage area and the second storage area.

According to the software upgrade system provided in this implementation, the first control unit may implement quick rollback of a software version by switching the roles of the first storage area and the second storage area.

In a possible implementation, the trigger event includes one of the following:
the third software version is abnormal;
upgrade is canceled; or
the third software version fails to be updated.

According to the software upgrade system provided in this implementation, the control apparatus triggers rollback of the software version when an exception occurs, so that reliability of software upgrade can be ensured.

In a possible implementation, the trigger event includes that the third software version is abnormal, and when the control apparatus detects whether the trigger event exists, the control apparatus is specifically configured to: detect whether the third software version belongs to a version set, where the version set includes N matched software versions, and the N matched software versions are respectively software versions corresponding to N control units; or when the N control units respectively run corresponding software, detect whether a control unit that runs abnormally exists in the N control units. The N control units include the first control unit, the N control units are coupled to each other, N is less than or equal to M, and N is an integer greater than 1.

According to the software upgrade system provided in this implementation, for the N control units having a coupling relationship, it is detected that software versions running after the software version upgrade are mutually matched software versions, to ensure that the N control units run normally and stably, and improve reliability of software upgrade.

In a possible implementation, the control apparatus is further configured to: obtain association information between the M control units; and determine the N control units from the M control units based on the association information.

According to the software upgrading system provided in this implementation, based on the association information between the M control units, for example, the association information may include a service interaction relationship between the M control units, the control apparatus may identify, from the M control units, the N control units that have the coupling relationship, to ensure that the N control units run the matched software versions after performing software upgrade, and improve reliability of software upgrade.

In a possible implementation, the control apparatus is specifically configured to: determine orchestration information of the M control units based on the association information, where the orchestration information indicates a sequence in which the M control units perform software version upgrade; and send the third software version to the first control unit based on the orchestration information.

According to the software upgrade system provided in this implementation, the control apparatus determines the orchestration information of the M control units. This ensures that each control unit is upgraded in a software version upgrade sequence in a software upgrade process, and ensures that all control units having a dependency relationship can complete software version upgrade, thereby reducing a possibility of an upgrade exception, and improving reliability of software upgrade.

In a possible implementation, the orchestration information further indicates the M control units to perform software version upgrade in a serial manner and/or a parallel manner.

According to the software upgrade system provided in this implementation, in one aspect, software version upgrade of the control units having the dependency relationship may be performed in the serial manner, to improve upgrade reliability. In another aspect, software version upgrade of control units that do not have the dependency relationship may be upgraded in the parallel manner, to improve upgrade efficiency.

In a possible implementation, the control apparatus is further configured to store a mapping relationship, where the mapping relationship indicates a correspondence between a partition of the control apparatus and a storage area of the first control unit.

According to the software upgrade system provided in this implementation, the control apparatus stores the mapping relationship between the partition of the control apparatus and the storage area of the first control unit, so that the control apparatus synchronizes the software version to the first control unit.

In a possible implementation, the first partition is a logical partition or a physical partition; and/or the second partition is a logical partition or a physical partition. The physical partition is a physical storage area of a memory of the control apparatus, and the logical partition is a mapping area of the physical storage area of the memory.

According to the software upgrading system provided in this implementation, when the partition of the control apparatus is the logical partition, overheads of the storage area can be reduced. When the partition of the control apparatus is the physical partition, reliability of software upgrade can be improved. For example, when storage space of the first control unit is limited, the memory of the control apparatus stores a currently running software version and a previous software version, to facilitate version rollback of the first control unit.

In a possible implementation, the first storage area corresponds to a first image area, and a software version deployed in the first image area is the same as a software version deployed in the first storage area.

According to the software upgrade system provided in this implementation, the image area corresponding to the storage area is set in the first control unit, so that when a data exception occurs in the storage area, the software version in the image area is switched to and executed, thereby further improving reliability of a software system.

In a possible implementation, the control apparatus is further configured to: after the first control unit switches the roles of the first storage area and the second storage area, establish a correspondence between the first image partition and a primary storage area obtained through switching.

According to the software upgrade system provided in this implementation, it is ensured that the primary storage area of the first control unit has the corresponding first image partition, so that the software version in the primary storage area is synchronized to the first image partition, and when the data exception occurs in the primary storage area, the software version in the image area is switched to, thereby improving reliability of the software system.

In a possible implementation, the second storage area corresponds to a second image area, and a software version deployed in the second image area is the same as a software version deployed in the second storage area.

According to the software upgrade system provided in this implementation, the primary storage area and the secondary storage area of the first control unit are respectively bound to corresponding image areas, and a binding relationship between the image area and the storage area does not need to be modified, thereby improving processing efficiency of the software system.

In a possible implementation, the control apparatus is further configured to: send a switching instruction to the first control unit when a data exception occurs in the first storage area, where the switching instruction instructs to switch the first image partition to the primary storage area; and the first control unit is configured to switch the first image partition to the primary storage area according to the switching instruction.

According to the software upgrade system provided in this implementation, when the data exception occurs in the first storage area, the first control unit switches the first image partition to the primary storage area, so that the first control unit continues to run the software version backed up in the first image partition, thereby avoiding version rollback of the first control unit.

In a possible implementation, the control apparatus is further configured to: send a pause instruction to the first control unit, where the pause instruction instructs to pause a software upgrade task, and the software upgrade task is upgrading the second software version to the third software version. The first control unit is further configured to: pause the software upgrade task according to the pause instruction, and save breakpoint information; and send the breakpoint information to the control apparatus. The breakpoint information includes at least one of the following: a task parameter, task progress, or orchestration information.

According to the software upgrade system provided in this implementation, in the software upgrade process, the software upgrade task of the first control unit may be paused, to avoid impact of long upgrade time on vehicle use.

In a possible implementation, the control apparatus is further configured to: detect whether a paused software upgrade task exists, where the software upgrade task is upgrading the second software version to the third software version; obtain breakpoint information of the software upgrade task when the paused software upgrade task exists; and send an upgrade continuing instruction to the first control unit based on the breakpoint information, where the upgrade continuing instruction instructs to continue to execute the software upgrade task. The first control unit is further configured to continue to execute the software upgrade task based on the breakpoint information and according to the upgrade continuing instruction.

According to the software upgrade system provided in this implementation, when determining that the paused software upgrade task exists, the control apparatus may continue to execute the software upgrade task, and implement resumable upgrade in the upgrade process. This improves convenience of vehicle use of a user.

According to a second aspect, this application provides a software upgrade control method, applied to a control apparatus. The control apparatus includes a first partition and a second partition, a second software version is deployed in the first partition, a first software version is deployed in the second partition, and the method includes: receiving a third software version; updating the first software version in the second partition to the third software version; and sending the third software version to a first control unit.

In a possible implementation, when the third software version of the software is sent to the first control unit, the third software version and information about a first storage area are sent to the first control unit, and the first control unit includes the first storage area.

In a possible implementation, after the sending the third software version to a first control unit, the method further includes: detecting whether a trigger event exists, where the trigger event is used to trigger rollback of the third software version to the second software version; and sending the second software version to the first control unit when the trigger event exists, or sending indication information to the first control unit, where the indication information indicates to roll back the third software version to the second software version.

In a possible implementation, the trigger event includes one of the following:
the third software version is abnormal;
upgrade is canceled; or
the third software version fails to be updated.

In a possible implementation, the trigger event includes that the third software version is abnormal, and the detecting whether a trigger event exists includes: detecting whether the third software version belongs to a version set, where the version set includes N matched software versions, and the N matched software versions are respectively software versions corresponding to N control units; or when the N control units respectively run corresponding software, detecting a control unit that runs abnormally in the N control units. The N control units include the first control unit, the N control units are coupled to each other, N is less than or equal to M, and both N and M are integers greater than 1.

In a possible implementation, the method further includes: obtaining association information between the M control units; and determining the N control units from the M control units based on the association information.

In a possible implementation, the sending the third software version to a first control unit includes: determining orchestration information of the M control units based on the association information, where the orchestration information indicates a sequence in which the M control units perform software version upgrade; and sending the third software version to the first control unit based on the orchestration information.

In a possible implementation, the orchestration information further indicates the M control units to perform software version upgrade in a serial manner and/or a parallel manner.

In a possible implementation, the method further includes: storing a mapping relationship, where the mapping relationship indicates a correspondence between a partition of the control apparatus and a storage area of the first control unit.

In a possible implementation, the first partition is a logical partition or a physical partition; and/or the second partition is a logical partition or a physical partition. The physical partition is a physical storage area of a memory of the control apparatus, and the logical partition is a mapping area of the physical storage area of the memory.

In a possible implementation, the first storage area corresponds to a first image area, and a software version deployed in the first image area is the same as a software version deployed in the first storage area.

In a possible implementation, after the sending the third software version to a first control unit, the method further includes: establishing a correspondence between the first image partition and a primary storage area obtained through switching.

In a possible implementation, the method further includes: sending a switching instruction to the first control unit when a data exception occurs in the first storage area, where the switching instruction instructs to switch the first image partition to the primary storage area.

In a possible implementation, the method further includes: sending a pause instruction to the first control unit, where the pause instruction instructs to pause a software upgrade task, and the software upgrade task is upgrading the second software version to the third software version.

In a possible implementation, the method further includes: obtaining breakpoint information of the first control unit, where the breakpoint information includes at least one of the following: a task parameter, task progress, or orchestration information.

In a possible implementation, the method further includes: detecting whether a paused software upgrade task exists, where the software upgrade task is upgrading a running first software from the second software version to the third software version; and sending an upgrade continuing instruction to the first control unit based on the breakpoint information when the paused software upgrade task exists, where the upgrade continuing instruction instructs to continue to execute the software upgrade task.

For beneficial effect of the control apparatus provided in the second aspect and the possible implementations of the second aspect, refer to the beneficial effect achieved by the first aspect and the possible implementations of the first aspect. Details are not described herein again.

According to a third aspect, this application provides a control apparatus, including a module configured to perform the method according to the second aspect or the possible implementations.

According to a fourth aspect, this application provides a vehicle, including: a control apparatus, where the control apparatus includes a first partition and a second partition, a second software version is deployed in the first partition, a first software version is deployed in the second partition, and the control apparatus is configured to perform the method according to the second aspect or the possible implementations.

In a possible implementation, M control units are further included, M is a positive integer, and the M control units include a first control unit.

According to a fifth aspect, this application provides a chip, including a processor, configured to: invoke computer instructions from a memory and run the computer instructions, so that a device in which the chip is installed performs the method according to the second aspect or the possible implementations.

According to a sixth aspect, this application provides a computer-readable storage medium, configured to store computer program instructions, where the computer program enables a computer to perform the method according to the second aspect or the possible implementations.

According to a seventh aspect, this application provides a computer program product, including computer program instructions, where the computer program instructions enable a computer to perform the method according to the second aspect or the possible implementations.

### BRIEF DESCRIPTION OF DRAWINGS

FIG. 1 is a diagram of an application scenario according to an embodiment of this application;
FIG. 2 is a diagram of another application scenario according to an embodiment of this application;
FIG. 3 is a diagram of a hardware architecture of an electronic device according to an embodiment of this application;
FIG. 4a is a diagram of partition mapping according to an embodiment of this application;
FIG. 4b is a diagram of partition binding according to an embodiment of this application;
FIG. 5 is a diagram of a gateway topology relationship according to an embodiment of this application;
FIG. 6 is a diagram of a control unit group according to an embodiment of this application;
FIG. 7a is a diagram of other partition mapping according to an embodiment of this application;
FIG. 7b is a diagram of other partition binding according to an embodiment of this application;
FIG. 7c is a diagram of other partition binding according to an embodiment of this application;
FIG. 8 is a schematic flowchart of software upgrade control according to an embodiment of this application;
FIG. 9 is a schematic flowchart of partition switching according to an embodiment of this application;
FIG. 10 is a diagram of an execution sequence of control units according to an embodiment of this application;
FIG. 11a and FIG. 11b are schematic flowcharts of breakpoint upgrade resume according to an embodiment of this application;
FIG. 12 is a diagram of a software upgrade state machine of a control unit according to an embodiment of this application; and
FIG. 13 is a schematic flowchart of software upgrade control method according to an embodiment of this application.

### DESCRIPTION OF EMBODIMENTS

The following describes the technical solutions in embodiments of this application with reference to the accompanying drawings in embodiments of this application.

The technical solutions in embodiments of this application may be applied to an electronic device.

The electronic device may be a movable device or an apparatus deployed in the movable device. The movable device may have any appearance, for example, an intelligent vehicle or an intelligent robot. The intelligent vehicle may be an autonomous driving vehicle that implements all functions as automatic control, or an assisted driving vehicle that implements some functions as automatic control to provide driving assistance. In the following, the autonomous driving vehicle or the assisted driving vehicle is referred to as a vehicle for short.

The electronic device may be a terminal device. For example, a handheld device or a vehicle-mounted device. Currently, some examples of the terminal device may be a mobile phone (mobile phone), a tablet computer (pad), a computer (like a notebook computer or a palmtop computer), a mobile Internet device (mobile Internet device, MID), a virtual reality (virtual reality, VR) device, an augmented reality (augmented reality, AR) device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted device, a wearable device, and the like.

For ease of understanding, the following uses an example in which the technical solutions of this application are applied to a vehicle for description.

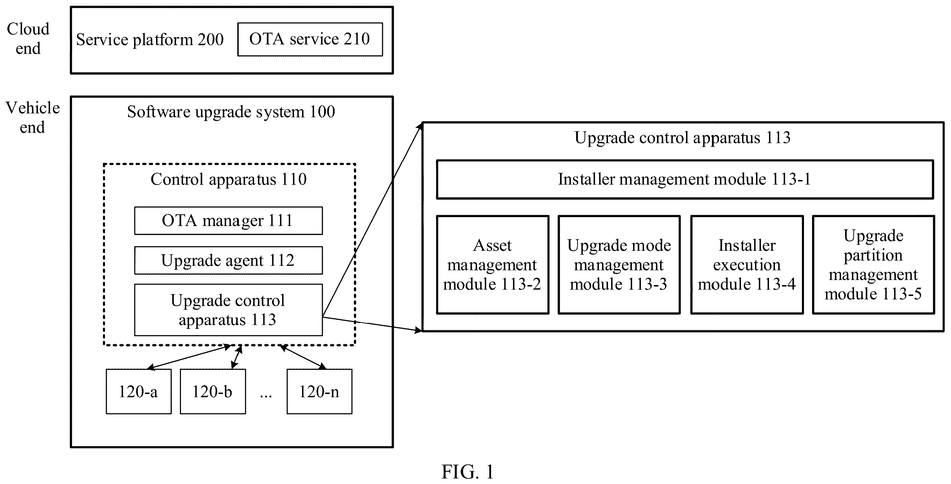

FIG. 1 is a diagram of an application scenario according to an embodiment of this application. With reference to FIG. 1, a software upgrade system 100 in a vehicle end is wirelessly connected to a service platform 200 in a cloud end. The software upgrade system 100 and the service platform 200 may implement remote vehicle management based on OTA through an air interface of mobile communication.

The OTA is a technology of downloading an upgrade data package through a wireless network to upgrade a vehicle system. In comparison with a conventional manner of repairing a system defect by recalling a vehicle, the OTA is widely used because of advantages of low costs and high efficiency. In addition, the OTA also helps add a new function to the vehicle, to improve user experience.

Vehicle OTA may include the following two types:
(1) Firmware-over-the-air upgrade (firmware-over-the-air, FOTA): A vehicle downloads a firmware image from a cloud end through a wireless or mobile network, and upgrades ECU nodes such as a cockpit, power, a chassis, a vehicle body, and intelligent driving of the vehicle. For example, a steering system of the vehicle may be upgraded, and reaction strength of an accelerator pedal may be upgraded.
(2) Software-over-the-air upgrade (software-over-the-air, SOTA): It is also referred to as application online upgrade, and is mainly user-perceived vehicle-mounted application software upgrade, including an application, a human-machine interface, a vehicle-mounted map, voice library update, and the like.

For example, an OTA server (server) 210 is deployed in the service platform 200. The OTA server 210 is configured to implement OTA upgrade task process management and control of the vehicle, including capabilities such as vehicle management, upgrade package management, an upgrade policy, upgrade maintenance, and detection. The service platform 200 may send a software upgrade package and/or an upgrade instruction to the software upgrade system 100, and the service platform 200 and the software upgrade system 100 may further exchange upgrade statuses.

For example, a control apparatus 110 and at least one control unit 120 are deployed in the software upgrade system 100. The control apparatus 110 may include an OTA manager (manager) 111, an upgrade agent (update agent) 112, and an upgrade control apparatus 113. The OTA manager 111 is configured to connect to the OTA server 210, and is responsible for software upgrade package download, upgrade procedure control, and the like of a plurality of control units 120 (for example, 120-a to 120-n) in the vehicle. The update agent 112 is configured to provide a unified interface, to be compatible with different in-vehicle communication networks and communication protocols, and further adapt to interface differences of different vehicles.

The upgrade control apparatus 113 is configured to implement software upgrade control on at least one control unit (for example, 120-a to 120-n). For example, the upgrade control apparatus 113 includes an installer management module 113-1, an asset management (inventory) management module 113-2, an upgrade mode (update mode) management module 113-3, an installer (installer) execution module 113-4, and an upgrade partition manager (partition manager) module 113-5.

The installer management module 113-1, also referred to as an installer manager (installer manager), is configured to provide a unified northbound service-based interface for the update agent 112 to invoke, orchestrate an upgrade sequence (including but not limited to serial manner and/or a parallel) of a plurality of control units (for example, 120-a to 120-n), and manage an upgrade progress and/or an upgrade status.

The asset management module 113-2 is configured to provide asset management and asset information collection functions. Assets of the control unit may include a version, a vendor number, a serial number, and the like of the control unit.

The upgrade mode management module 113-3 is configured to provide an upgrade mode switching function, for example, control the control unit to enter and exit an upgrade mode.

The installer execution module 113-4 is configured to control installation, activation, rollback (namely, version rollback), upgrade pause, upgrade resumption, upgrade stop, and the like of software of the control unit.

The upgrade partition management module 113-5 is configured to manage a physical partition and/or a logical partition of the upgrade control apparatus 113 and a physical storage partition (for example, a primary storage area, a secondary storage area, or an image area in the following) of the control unit. For example, the upgrade partition management module 113-5 may perform at least one of the following: partition fault detection, mapping management of a logical partition of the upgrade control apparatus 113 and a physical storage partition of each control unit, binding management of a primary storage area and an image partition of the control unit, binding management of a secondary storage area and an image partition of the control unit, and the like.

The control units (for example, 120-a to 120-n) may be ECUs, and are also referred to as "driving computers", "vehicle-mounted computers", or the like. For example, the ECU may include a microcontroller unit (microcontroller unit, MCU), a memory (for example, a read-only memory (read-only memory, ROM), a random access memory (random access memory, RAM)), an input/output (input/output, I/O) interface, an analog-to-digital (analog-to-digital, A/D) converter and a large-scale integrated circuit like a shaping circuit and a drive circuit.

The ECU may be configured to implement a functional unit of the vehicle end. For example, an advanced driver assistance system (advanced driving assistance system, ADAS), an in-vehicle infotainment (in-vehicle infotainment, IVI) system, a vehicle control unit (vehicle control unit, VCU), a body control module (body control module, BCM), and a thermal management system (thermal management system, TMS).

For example, the control apparatus 110 may be interconnected to the ECUs (for example, 120-a to 120-n) through a gateway (gateway). The control apparatus 110 may communicate with the gateway according to an ETH protocol, and the gateway may communicate with the ECU according to a controller area network (Controller Area Network, CAN) protocol.

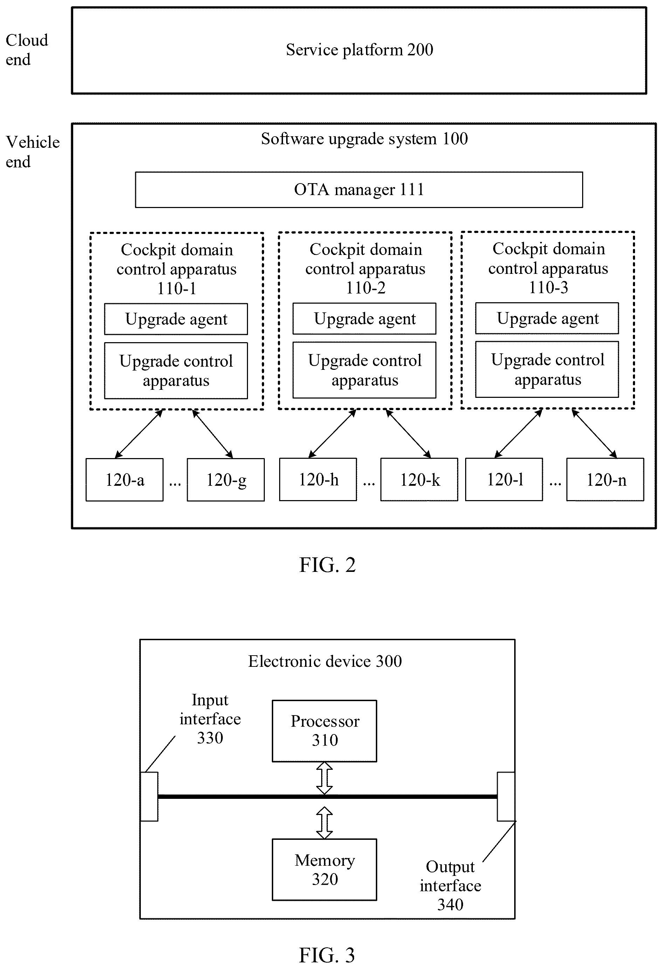

In some scenarios, to improve a capability of managing the control units (for example, 120-a to 120-n), the vehicle system may be divided into a plurality of domains (for example, a vehicle control domain, an intelligent driving domain, and a cockpit domain). One control apparatus performs software upgrade management on control units in one domain. For example, refer to FIG. 2. A cockpit domain control apparatus 110-1 performs software upgrade management on ECUs 120-a to 120-g, and an intelligent driving domain control apparatus 110-2 performs software upgrade management on ECUs 120-h to 120-k, a vehicle control domain control apparatus 110-3 performs software upgrade management on ECUs 120-1 to 120-n.

When the control apparatus is deployed in the domain, an upgrade control apparatus in the control apparatus (for example, at least one of 110-1 to 110-3) may be implemented as a domain upgrade manager (domain upgrade manager, DUM). It should be understood that a name of the control apparatus deployed in the domain is not limited in this application, and the DUM is an example.

In a software upgrade process, to improve upgrade performance and reliability, the ECU adopts a dual-partition design so that version rollback can be quickly performed if software upgrade fails. For example, an upgrade procedure may be as follows: When a software version v2 stored in a primary partition A runs normally, a software version v1 stored in a secondary partition B is in a standby state. After receiving an upgrade task, the update agent 112 upgrades the software version in the secondary partition B to v3, and running of the software version v2 in the primary partition A is not affected. After the upgrade is complete, partition switching is performed, partition A is used as the secondary partition, and partition B is used as the primary partition. The switching takes effect after reset. After the system is started, the software version v3 in the primary partition B runs.

However, some ECUs with small memory space cannot support the dual-partition design. When a partition is damaged in a single-partition design, a function of the ECU fails, and quick rollback is not supported. Consequently, reliability of software upgrade is reduced. In view of this, in this application, for an ECU with small memory space, dual partitions of an external apparatus are mapped to a partition in the ECU, to implement dual-partition management of the ECU, thereby improving reliability of software upgrade of the ECU.

It should be understood that the ECU is merely used as an example for description in this application, and this is not limited. The software upgrade method provided in this application is also applicable to another apparatus with small memory space.

The control apparatus 110 in the software upgrade system 100 may be implemented, in hardware, as an electronic device 300 shown in FIG. 3. The electronic device 300 may include a processor 310 and a memory 320. The processor 310 and the memory 320 communicate with each other through an internal connection path. The memory 320 is configured to store instructions, the processor 310 is configured to execute the instructions stored in the memory 320. In some embodiments, the memory 320 includes storage partitions, such as a first partition and a second partition in the following.

Optionally, the memory 320 may include a read-only memory and a random access memory, and provide instructions and data for the processor. A part of the memory may further include a nonvolatile random access memory. The memory 320 may be a separate component, or may be integrated in the processor 310.

In some embodiments, the electronic device 300 may further include an input interface 330. The processor 310 may control the input interface 330 to communicate with another device or chip, and specifically, may obtain information or data sent by the another device or chip.

In some embodiments, the electronic device 300 may further include an output interface 340. The processor 310 may control the output interface 340 to communicate with another device or chip, and specifically, may output information or data to the another device or chip.

Division of the units in the apparatus is merely division of logical functions. During actual implementation, all or some of the units may be integrated into one physical entity, or may be physically separated.

It should be understood that the processor in embodiments of this application may be an integrated circuit chip and has a signal processing capability. In an implementation process, steps of the foregoing method embodiments may be completed by using an integrated logic circuit of hardware in the processor or instructions in a form of software. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), or an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these memories and any memory of another appropriate type.

A quantity of control apparatuses and a quantity of control units are not limited in embodiments of this application. There may be one or more control apparatuses and control units, and one control apparatus may control software upgrade of one control unit, or may control software upgrade of a plurality of control units.

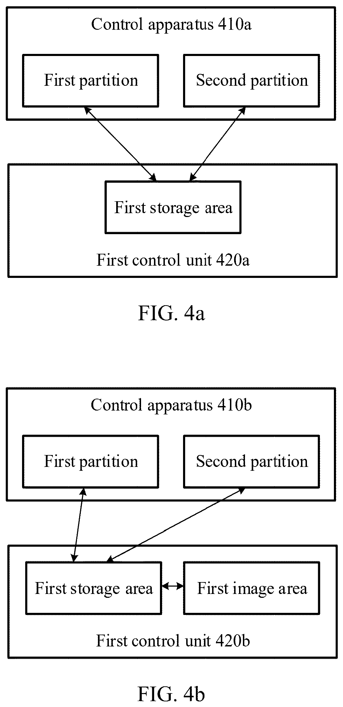

FIG. 4a is a diagram of partition mapping according to an embodiment of this application. With reference to FIG. 4a, this embodiment of this application is described by using a control apparatus 410a and a first control unit 420a as an example. The first control unit is any one of M control units, the M control units are some or all storage units (for example, the control units 120-a to 120-n in FIG. 1 or FIG. 2) connected to the control apparatus, and M is a positive integer.

The control apparatus 410a includes a first partition and a second partition. The first partition may be a physical partition or a logical partition. When the first partition is the physical partition, the first partition may be a physical storage area of a memory (for example, 320 in FIG. 3) of the control apparatus 410a. When the first partition is the logical partition, the first partition may be a mapping area of the physical storage area of the memory of the control apparatus 410a, or the first partition may be a mapping area of a physical storage area of a memory of the first control unit 420a. Similarly, the second partition may also be the physical partition or the logical partition. Generally, the first partition and the second partition are two different partitions. To be specific, the first partition and the second partition occupy different physical storage areas, or the first partition and the second partition are mapped to different physical storage areas.

Two different software versions are respectively deployed in the first partition and the second partition of the control apparatus 410a. For example, a second software version corresponding to the first control unit is deployed in the first partition, and a first software version corresponding to the first control unit is deployed in the second partition. Generally, the first software version and the second software version are different versions of same software. For example, the second software version is an upgrade version of the first software version. However, this is not limited in this application.

The first control unit 420a includes a first storage area. The first storage area may be the physical storage area of the memory of the first control unit 420a. For example, the first control unit 420a runs a software version deployed in the first storage area. For example, the second software version is deployed in the first storage area, and the first control unit 420a runs the second software version.

The first partition and the second partition of the control apparatus 410a may be separately mapped to the first storage area of the first control unit 420a. A mapping relationship between the first partition and the first storage area and a mapping relationship between the second partition and the first storage area may be stored by the control apparatus 410a. The mapping relationship may be set on the control apparatus side 410a in an initialization phase.

For example, the control apparatus 410a may receive a third software version. For example, in an OTA upgrade process, the control apparatus 410a receives the third software version sent by a service platform (for example, 200 in FIG. 1 or FIG. 2) of in a cloud end. The third software version may be an upgrade version of the second software version. However, this is not limited in this application.

To avoid affecting running of the second software version by the first control unit, the control apparatus 410a may update the first software version in the second partition to the third software version, and further send the third software version to the first control unit 420a. The first control unit 420a updates the second software version deployed in the first storage area to the third software version, to implement software upgrade.

In a process in which the control apparatus 410a updates the first software version in the second partition to the third software version, a write operation may be performed based on a write-back (write-back) mode. In the write-back mode, the control apparatus 410a first flashes the second partition, and does not actually flash the first storage area of the first control unit 420a, to avoid flashing the first storage area again in a software rollback process.

Further, when upgrade activation takes effect, the control apparatus 410a performs data synchronization between the second partition and the first storage area, to ensure that the first storage area is actually successfully flashed, that is, the third software version is written into the first storage area. In another description, the data synchronization between the second partition and the first storage area may be that the control apparatus 410a sends the third software version to the first control unit 420a, and the first control unit 420a implements a write operation.

For example, when the control apparatus 410a sends the third software version to the first control unit 420a, the control apparatus 410a further sends information about the first storage area to the first control unit 420a, for example, an address or an identifier of the first storage area. In this way, the first control unit 420a determines a write location of the third software version.

Optionally, when the upgrade activation takes effect, the control apparatus 410a compares, after a system is started, whether the software version in the second partition is consistent with the software version in the first storage area, and if the software versions are inconsistent, synchronizes the third software version in the second partition to the first storage area.

In the embodiment shown in FIG. 4a, the control apparatus updates the first software version deployed in the second partition to the third software version, and synchronizes the third software version to the first storage area of the first control unit. In a process in which the first control unit updates the second software version deployed in the first storage area to the third software version, the first partition of the control apparatus still maintains the second software version, to ensure that the first control unit can quickly roll back to the second software version after upgrade fails or upgrade is canceled, thereby improving reliability of software upgrade.

In some embodiments, the control apparatus 410a may detect whether a trigger event exists. The trigger event is used to trigger rollback of the third software version deployed in the first storage area to the second software version. When the trigger event exists, the control apparatus 410a may send the second software version to the first control unit 420a. The first control unit 420a may receive the second software version, and roll back, based on the received second software version, the third software version deployed in the first storage area to the second software version. In this way, the first control unit 420a implements quick rollback of the software version.

Optionally, when sending the second software version to the first control unit 420a, the control apparatus 410a may further send the information about the first storage area to the first control unit 420a.

For example, the control apparatus 410a may perform data synchronization between the first partition and the first storage area, to write the second software version in the first partition into the first storage area, thereby implementing transmission of the second software version.

For example, the trigger event may include at least one of the following.
1. The third software version is abnormal. For example, an exception caused by a vulnerability in the third software version, an exception caused by inadaptation to the first control unit 420a, or an exception caused by the third software version not belonging to a version set (details are described below).
2. Upgrade is canceled. For example, the control apparatus 410a cancels the upgrade in response to an upgrade cancellation operation of a user; or the control apparatus 410a is powered off or restarted, causing the upgrade to be canceled.
3. The third software version fails to be updated. For example, an update failure caused by an exception in an update (or upgrade) process. The update failure includes an update failure that occurs when the third software version is upgraded for a first time, or an update failure that is sent in a breakpoint upgrade resume process of the third software version. The breakpoint upgrade resume means that the upgrade is paused and then resumed in a process of upgrading the third software version.

In some embodiments, there is a coupling relationship between N control units in M control units connected to the control apparatus 410a, and in the N control units having the coupling relationship, software versions running between the control units should be matched software versions. Generally, control units having a service interaction relationship are coupled to each other. For example, a cockpit control unit and an air conditioner control unit are coupled to each other.

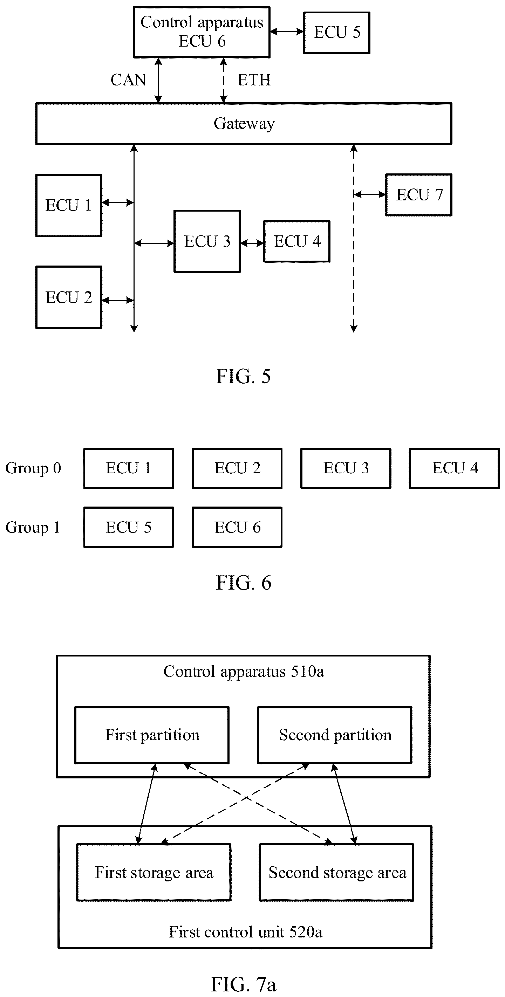

With reference to FIG. 5, an ECU 6 is a control apparatus, an ECU 1 to an ECU 5 are connected to a CAN channel, and an ECU 7 is connected to an ETH channel. For example, the ECU 1 to the ECU 4 are coupled to each other. For another example, the ECU 5 and the ECU 6 are coupled to each other. In this case, software versions of the ECU 1 to the ECU 4 should be matched versions. For example, if the software versions of the ECUs 1 to 3 are upgraded to a new version in an upgrade process, and the software version of the ECU 4 is an upgraded software version or the software version of the ECU 4 fails to be upgraded, the software version of the ECU 4 and the software versions of the ECU 1 to the ECU 3 do not match, and a vehicle system runs abnormally or is unstable. Software versions of the ECU 5 and the ECU 6 should be matched versions. Similarly, if the software versions of the ECU 5 and the ECU 6 do not match due to upgrade, the vehicle system runs abnormally or is unstable. With reference to FIG. 6, ECUs having the coupling relationship may be managed in groups. For example, a group (group) 0 includes the ECU 1 to the ECU 4, and a group 1 includes the ECU 5 and the ECU 6.

When the exception in the third software version is used as the trigger event for rolling back the third software version deployed in the first storage area to the second software version, the control apparatus 410a may detect the trigger event based on the following two example events.

Example 1: The control apparatus 410a detects whether the third software version belongs to a version set, where the version set includes N matched software versions, and the N matched software versions are respectively software versions corresponding to N control units. For example, the first control apparatus 420a is the ECU 1 shown in FIG. 5, and the third software version and the software versions respectively deployed in the ECU 2 to the ECU 4 should be matched software versions. In other words, the version set includes the matched software versions respectively corresponding to the ECU 1 to the ECU 4. If the control apparatus 410a detects that the third software version does not belong to the version set, it indicates that the vehicle system is prone to be abnormal or unstable in this upgrade process. The control apparatus 410a may control each ECU to perform software version rollback, to ensure version matching between the ECU 1 and the ECU 4.

Optionally, the step of detecting, by the control apparatus 410a, whether the third software version belongs to the version set may be performed before the third software version is sent to the first control unit 420a, or may be performed after the third software version is sent to the first control unit 420a, for example, after upgrade activation of the first control unit 420a takes effect. This is not limited in this application.

It should be understood that, when the M control units include a plurality of groups of control units having the coupling relationship, the foregoing software version detection and rollback processes are performed on each group of control units having the coupling relationship. For brevity, details are not described again.

Example 2: When the N control units respectively run corresponding software, the control apparatus 410a detects whether a control unit that runs abnormally exists in the N control units. If the control unit that runs abnormally exists, it indicates that a control unit that is deployed with a non-matched software version exists in the N control units, or a control unit on which upgrade fails to be performed exists in the N control units. In this case, the vehicle system is prone to be abnormal or unstable in this upgrade process. The control apparatus 410a may control each control unit to perform software version rollback, to ensure version matching between the N control units.

In the foregoing example 1 or example 2, in one aspect, when determining that the N control units having the coupling relationship in the group include a control unit on which upgrade fails to be performed, or a control unit whose upgraded software version is not a matched software version, the control apparatus 410a controls the N control units in the group to roll back to corresponding previous software versions, thereby ensuring reliability of software upgrade. In another aspect, when upgrade of another group fails, an upgrade result of the group of control units is not affected. This avoids a case in which the software versions of all control units are rolled back when some control units fail to be upgraded, thereby improving software upgrade efficiency.

For example, the control apparatus 410a may obtain association information between the M control units, and determine the N control units from the M control units based on the association information. The association information may include a service interaction relationship between the control units. The control apparatus 410a may obtain asset information of the M control units, determine an association relationship between the M control units based on the asset information of the M control units, and further determine the N control units having the coupling relationship.

FIG. 7a is a diagram of other partition mapping according to an embodiment of this application. With reference to FIG. 7a, this embodiment of this application is described by using a control apparatus 510a and a first control unit 520a as an example. The control apparatus 510a shown in FIG. 7a is similar to the control apparatus 410a in the embodiment shown in FIG. 4a, and includes a first partition and a second partition. A difference lies in that the first control unit 520a in FIG. 7a includes a first storage area and a second storage area. The second storage area may be a physical storage area of a memory of the first control unit 520a, and the second storage area stores a first software version. Generally, the first storage area and the second storage area are different storage areas in a memory. The first partition of the control apparatus 510a may be mapped to the first storage area, and the second partition may be mapped to the second storage area.

The first storage area and the second storage area may be respectively a primary storage area and a secondary storage area of the first control unit 520a. For example, when the first control unit 520a runs a software version deployed in the primary storage area, a software version in the secondary storage area may be upgraded without affecting software running of the first control unit 520a. For example, when the first control unit 520a runs a second software version, the first storage area is the primary storage area, and the second storage area is the secondary storage area.

For example, after receiving a third software version, the control apparatus 510a may update the first software version in the second partition to the third software version, and further send the third software version to the first control unit 520a. The first control unit 520a updates the first software version deployed in the second storage area to the third software version, and switches roles of the first storage area and the second storage area. The roles include the primary storage area or the secondary storage area. In other words, after updating the first software version in the second storage area to the third software version, the first control unit 520a uses the second storage area as the primary storage area, and uses the first storage area as the secondary storage area.

In a process in which the control apparatus 510a updates the first software version in the second partition to the third software version, a write operation may be performed based on a write-back mode or a write-through (write-through) mode.

In the write-back mode, the control apparatus 510a first flashes the second partition, and does not actually flash the second storage area of the first control unit 520a. The control apparatus 510a may perform data synchronization between the second partition and the second storage area in a process in which upgrade activation takes effect, so that the third software version is sent to the first control unit 520a. In the write-back mode, both the first partition and the second partition may be physical partitions or logical partitions.

In the write-through mode, when flashing the second partition, the control apparatus 510a directly flashes the third software version to the second storage area, to synchronously update software in the second partition and send the third software version to the first control unit 520a. In the write-through mode, the first partition and the second partition are generally logical partitions.

For example, when the control apparatus 510a sends the third software version to the first control unit 520a, the control apparatus 510a further sends information about the second storage area to the first control unit 520a, for example, an address or an identifier of the second storage area. In this way, the first control unit 520a determines a write location of the third software version.

For example, when the upgrade activation takes effect, the control apparatus 510a switches the role of the second storage area to the primary storage area.

Optionally, when the upgrade activation takes effect, the control apparatus 410a compares, after a system is started, whether the software version in the second partition is consistent with the software version in the second storage area, and if the software versions are inconsistent, synchronizes the third software version in the second partition to the second storage area.

In some embodiments, the control apparatus 510a may detect whether a trigger event exists. The trigger event has been described in the foregoing embodiments, and details are not described herein again. The control apparatus 510a may send indication information to the first control unit 520a when the trigger event exists. The indication information indicates to roll back the third software version deployed in the first storage area to the second software version. The first control unit 520a may switch the roles of the first storage area and the second storage area. In other words, the first storage area is used as the primary storage area, and the second storage area is used as the secondary storage area. Because the second software version is still stored in the first storage area, quick rollback of the software version can be implemented.

In some embodiments, the first control unit 520a may set the software version in a secondary storage area obtained through role switching to an invalid state.

In some embodiments, the control apparatus 510a may store a correspondence between a partition of the control apparatus and a storage area of the first control unit.

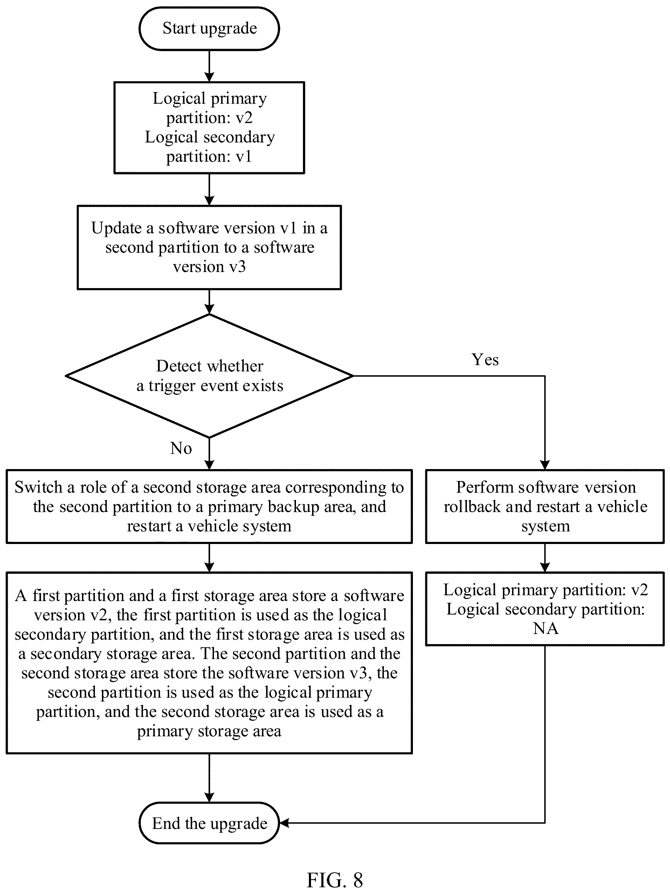

With reference to FIG. 8, after the upgrade starts, the first partition of the control apparatus 510a is used as a logical primary partition to store a software version v2, and the second partition is used as a logical secondary partition to store a software version v1. The control apparatus 510a updates the software version v1 in the second partition to a software version v3. The control apparatus 510a detects whether the trigger event exists. If the trigger event exists, the control apparatus 510a performs software version rollback, sets the software version in the second partition to an invalid state (NA) in a version rollback process, restarts a vehicle system, and ends the upgrade process. If there is no trigger event, the first control unit 520a switches the role of the second storage area corresponding to the second partition to a primary backup area, and restarts the vehicle system. In this case, the first partition and the first storage area store the software version v2, the first partition is used as the logical secondary partition, and the first storage area is used as the secondary storage area. The second partition and the second storage area store the software version v3, the second partition is used as a primary logical partition, and the second storage area is used as the primary storage area. The upgrade process ends.

To further improve reliability of a software system, in this embodiment of this application, an image area corresponding to the storage area may be set in the first control unit, so that when a data exception occurs in the storage area, a software version in the image area is switched to and executed.

FIG. 4b is a diagram of partition binding according to an embodiment of this application. With reference to FIG. 4b, a difference from FIG. 4a lies in that the first control unit 420b includes a first storage area and a first image area. The first storage area corresponds to the first image area, and a software version deployed in the first image area is the same as a software version deployed in the first storage area.

The control apparatus 410b may bind the first storage area to the first image area during initialization, that is, establish a correspondence between the first storage area and the first image area.

For example, after upgrade verification succeeds, the control apparatus 410b triggers data synchronization between the first storage area and the first image area. The upgrade verification may be implemented by running a software version of each control unit after upgrade activation takes effect. An upgrade verification process may be implemented in a same process as the foregoing embodiment in which corresponding software is respectively run in the N control units to detect whether the control unit that runs abnormally exists in the N control units.

For example, when there is a data exception in the first storage area, the control apparatus 410b may send a switching instruction to the first control unit 420b. The switching instruction instructs to switch a first image partition to a primary storage area. The first control unit 420b switches the first image partition to the primary storage area according to the switching instruction, to run a software version stored in the first image partition.

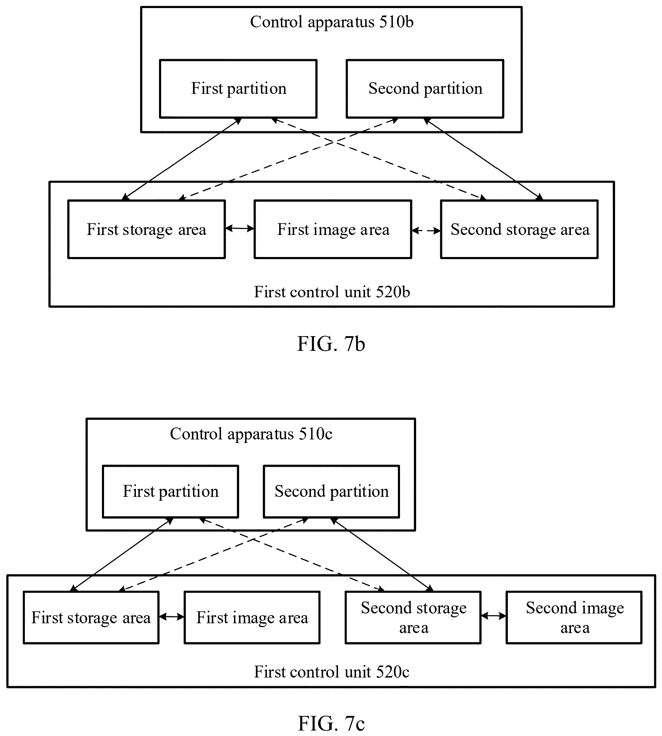

FIG. 7b is a diagram of other partition binding according to an embodiment of this application. With reference to FIG. 7b, a difference between this embodiment and FIG. 7a lies in that a first control unit 520b includes a first storage area, a second storage area, and a first image area. The first image area corresponds to a primary storage area, and a software version deployed in the first image area is the same as a software version deployed in the primary storage area.

The control apparatus 510b may bind the primary storage area (for example, the first storage area) to the first image area during initialization, that is, establish a correspondence between the primary storage area and the first image area.

For example, after the first control unit switches roles of the first storage area and the second storage area, the control apparatus 510b establishes a correspondence between the first image partition and a primary storage area obtained through switching (for example, the second storage area). In some embodiments, after upgrade verification succeeds, the control apparatus 510b may establish a correspondence between the first image partition and the primary storage area obtained through switching (for example, the second storage area). Optionally, the control apparatus 510b establishes a mapping relationship between the first image partition and a second partition. It is ensured that the software version in the first control unit 520b is not rolled back to an old version when a data fault occurs in the primary storage area.

FIG. 7c is a diagram of other partition binding according to an embodiment of this application. With reference to FIG. 7c, a difference between this embodiment and FIG. 7b lies in that the first control unit 520c further includes a second image area. The second image area corresponds to a secondary storage area (for example, a second storage area), and a software version deployed in the second image area is the same as a software version deployed in the secondary storage area.

The control apparatus 510c may bind a primary storage area (for example, the first storage area) to a first image area during initialization, that is, establish a correspondence between the primary storage area and the first image area, and bind the secondary storage area (for example, the second storage area) to the second image area, that is, establish a correspondence between the secondary storage area and the second image area.

For example, after the first control unit switches roles of the first storage area and the second storage area in the control apparatus 510c, the correspondence between the image partition and the storage area remains unchanged.

Optionally, the control apparatus 510c establishes a mapping relationship between the first image partition and a first partition and a mapping relationship between the second image partition and a second partition.

In comparison with the embodiment shown in FIG. 7b, in the embodiment shown in FIG. 7c, a binding relationship between the image area and the storage area does not need to be modified, thereby improving processing efficiency. In comparison with that in the embodiment shown in FIG. 7c, in the embodiment shown in FIG. 7b, physical storage space is saved.

Optionally, based on any one of embodiments shown in FIG. 7a to FIG. 7c, self-healing is performed in a storage area in which a data exception occurs in the first control unit, for example, a software version stored in a corresponding image area is rewritten into the storage area in which the data exception occurs.

It should be noted that, in any one of the foregoing embodiments, the control apparatus includes a first partition and a second partition that correspond to each control unit.

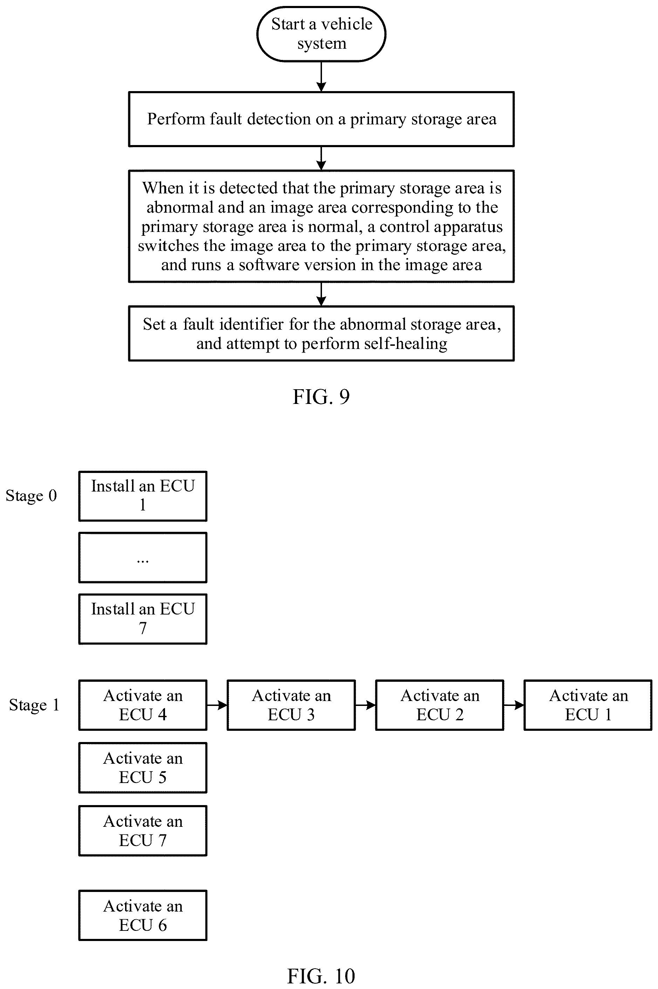

Based on any one of embodiments shown in FIG. 4b, FIG. 7b, and FIG. 7c, for performing, by the control apparatus, fault detection on the storage area of the first control unit, refer to a schematic flowchart shown in FIG. 9. After the vehicle system is started, fault detection is performed on the primary storage area. When it is detected that the primary storage area is abnormal and the image area corresponding to the primary storage area is normal, the control apparatus switches the image area to the primary storage area, and runs the software version in the image area, further sets a fault identifier for the abnormal storage area, and attempts to perform self-healing.

In some embodiments, the control apparatus may determine orchestration information of the M control units based on the association information. The orchestration information indicates a sequence in which the M control units perform software version upgrade. The control apparatus sends the third software version to the first control unit based on the orchestration information.

Optionally, the orchestration information further indicates the M control units to perform software version upgrade in a serial manner and/or a parallel manner.

For example, the M control units may include some control units having a dependency relationship in an upgrade process. Still refer to FIG. 6. The ECU 4 depends on the ECU 3, and the ECU 5 depends on the ECU 6. The dependency relationship may be determined based on a gateway topology relationship of the control units, that is, the association information includes the gateway topology relationship of the M control units.

For control units having the dependency relationship, software versions may be upgraded in the serial manner, and an upgrade sequence of the control units having the dependency relationship is determined. For control units that do not have the dependency relationship, software versions may be upgraded in the parallel manner.

With reference to FIG. 10, a software version upgrade process may include a software version installation stage (for example, a stage 0) and an upgrade activation effective stage (for example, a stage 1). The software version installation stage and the upgrade activation effective stage may be performed in serial. For example, after performing software version installation on the ECU 1 to the ECU 7 at the stage 1, the control apparatus performs activation on the ECU 1 to the ECU 7 at the stage 1. In the software version installation stage, the control apparatus may perform software version installation on the ECU 1 to the ECU 7 in parallel. In the upgrade activation effective stage, the control apparatus may perform serial activation on the ECU 1 to the ECU 4 having the dependency relationship, and perform parallel activation on the ECU 5 to the ECU 7 and the ECU 4 that do not have the dependency relationship.

For example, in a parallel mode, an installer management module may notify an installer execution module to create a thread to perform installation on the ECU 1, and then notify the installer execution module to create another concurrent thread to perform installation on the ECU 2, and the rest can be deduced by analogy.

For example, in a serial mode, the installer management module may notify the installer execution module to create a thread to sequentially perform activation on the ECU 4, the ECU 3, the ECU 2, and the ECU 1, and wait if installation of a corresponding ECU is not completed.

Generally, a vehicle includes a large quantity of control units, and it takes time to upgrade and flash each control unit. A larger quantity of control units on which upgrade needs to be performed indicates longer total time consumed, usually at an hour level. However, some devices and functions of the vehicle cannot be used in an upgrade process. For example, in the upgrade process, the vehicle cannot be driven, and a door of the vehicle cannot be opened or closed. In this case, it is inconvenient for a user to use the vehicle. Therefore, in embodiments of this application, breakpoint upgrade resume is implemented in the upgrade process, to improve convenience of using the vehicle by the user. For ease of understanding, the following uses an example in which the control apparatus implements resumable upgrade of the software version of the first control unit for description.

When an upgrade task needs to be paused, the control apparatus may send a pause instruction to the first control unit, where the pause instruction instructs to pause the software upgrade task, and the software upgrade task is a task of upgrading the second software version to the third software version. The first control unit may pause the software upgrade task according to the pause instruction, and save breakpoint information. Further, the first control unit may send the breakpoint information to the control apparatus.

The breakpoint information includes at least one of the following: a task parameter, task progress, or orchestration information. The task parameter may include a software upgrade task identifier (ID), upgrade status information, and the like.

For example, the control apparatus detects whether a paused software upgrade task exists, obtains breakpoint information of the software upgrade task when the paused software upgrade task exists, and then sends an upgrade continuing instruction to the first control unit based on the breakpoint information, where the upgrade continuing instruction instructs to continue to execute the software upgrade task. The first control unit continues to execute the software upgrade task based on the breakpoint information and the upgrade continuing instruction.

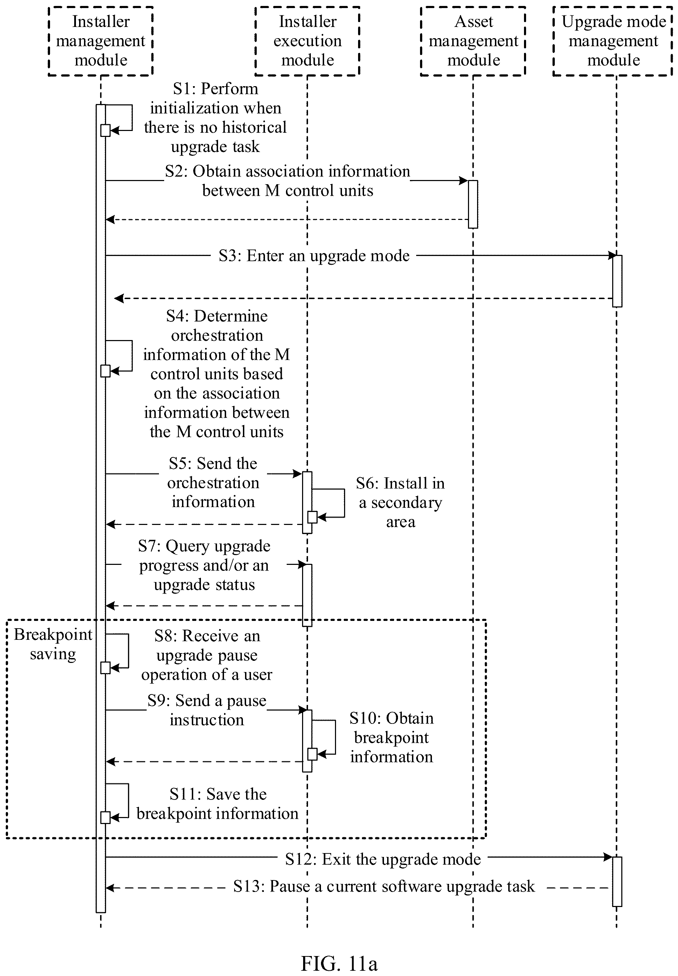

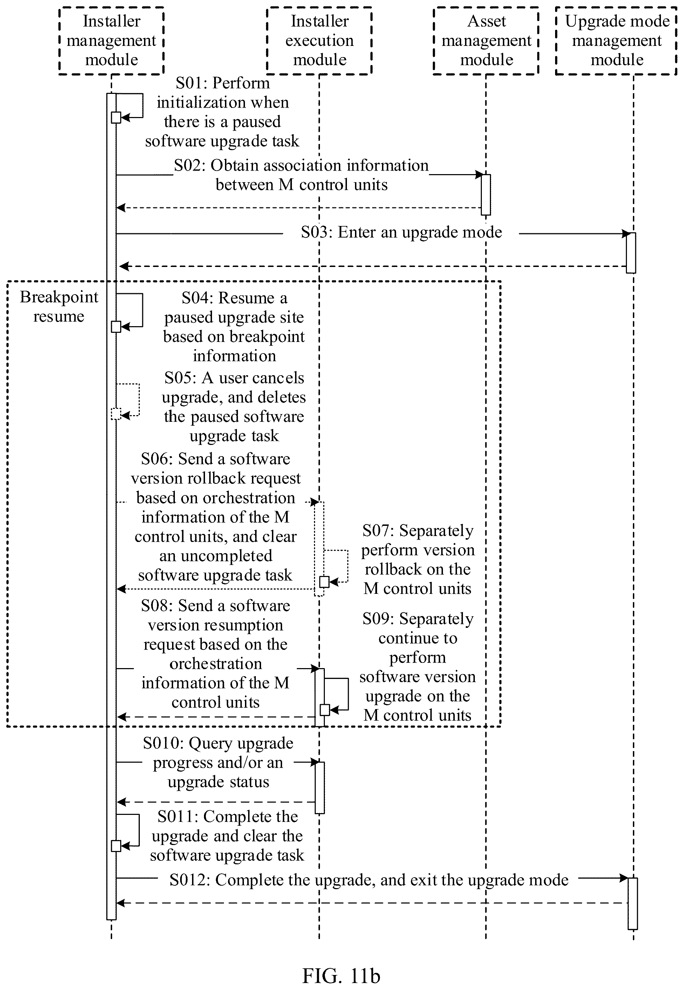

With reference to FIG. 11a and FIG. 11b, the following uses interaction between modules in the control apparatus as an example to describe breakpoint upgrade resume.

A breakpoint upgrade resumption procedure provided in FIG. 11a includes steps S1 to S13, which are described in detail below.

S1: An installer management module initializes a software upgrade system, determines whether a historical upgrade task exists, and may continue to upgrade the historical upgrade task when the historical upgrade task exists. This part is described in FIG. 11b. When it is determined that there is no historical upgrade task, a current software upgrade task may be continued, for example, upgrading a second software version to a third software version.

S2: The installer management module interacts with an asset management module to obtain association information of M control units. For example, the installer management module sends an association information obtaining request to the asset management module, and the asset management model sends the association information to the installer management module in response to the association information obtaining request. It should be noted that the association information of the M control units may be determined after the asset management module collects asset information of the M control units. In another implementation, the asset management module may directly send the asset information of the M control units to the installer management module. The installer management module determines the association information based on the asset information of the M control units.

S3: The installer management module interacts with an upgrade mode management module to enter an upgrade mode. For example, the installer management module sends a software upgrade task request to the upgrade mode management module, and the upgrade mode management module determines, in response to the request, that a vehicle system enters the upgrade mode, and sends, to the installer management module, a response for entering the upgrade mode.

S4: The installer management module determines orchestration information of the M control units based on the association information of the M control units.

S5: The installer management module sends the orchestration information to the installer execution module.

S6: The installer execution module installs, in a corresponding secondary area based on the orchestration information, a software version corresponding to each control unit, where the secondary area may be a secondary partition of a control apparatus and/or a secondary storage area of the control unit.

S7: The installer management module may send a query request to the installer execution module, to request to query software upgrade progress and/or a software upgrade status of each control unit. For example, the software upgrade status may include upgrade success, upgrade failure, and the like. The installer execution module sends the software upgrade progress and/or the software upgrade status to the installer management module in response to the query request.

S8: The installer management module receives an upgrade pause operation of a user. The installer management module may generate a pause instruction in response to the upgrade pause operation of the user. In another implementation, the installer management module may generate the pause instruction in response to a pause trigger event. For example, the pause trigger event is that a vehicle starts to travel in the software upgrade process.

S9: The installer management module sends the pause instruction to the installer execution module.

S10: In response to the pause instruction, the installer execution module obtains breakpoint information respectively corresponding to the M control units, and sends the breakpoint information to the installer management module.

S11: The installer management module stores the breakpoint information respectively corresponding to the M control units.

S12: The installer management module sends a request for exiting the upgrade mode to the upgrade mode management module.

S13: The upgrade mode management module pauses a current software upgrade task in response to the request for exiting the upgrade mode.

A breakpoint upgrade resumption procedure provided in FIG. 11b includes steps S01 to S012. S02, S03, and S010 are respectively similar to S2, S3, and S7 in the embodiment shown in FIG. 11a. For brevity, details are not described again.

S01: An installer management module initializes a vehicle system, and detects that a paused software upgrade task exists.

S04: The installer management module resumes a paused upgrade site based on breakpoint information of a software upgrade task, for example, determines at least one of a software upgrade task ID, orchestration information of M control units, upgrade status information respectively corresponding to the M control units, an upgrade parameter, and upgrade progress.

In a scenario 1, a control apparatus continues to execute the software upgrade task based on the resumed upgrade site. In a scenario 2, the control apparatus may cancel the software upgrade task in response to an upgrade cancellation operation of a user.

In an implementation, the control apparatus continues, by default, to upgrade the paused software upgrade task, and can cancel the software upgrade task in response to the upgrade cancellation operation of the user. In another implementation, the control apparatus may push, to the user, an interaction interface for confirming to continue the software upgrade task, continue to upgrade the software upgrade task in response to an operation of confirming, by the user, to continue the software upgrade task, and cancel the software upgrade task in response to an operation of canceling, by the user, the operation of continuing the software upgrade task.

In the foregoing scenario 1, the control apparatus continues to perform S08 to S012 in FIG. 11b. In the foregoing scenario 2, the control apparatus performs S06 and S07.

S06: The installer management module generates a software version rollback request based on the orchestration information of the M control units, and sends the rollback request to an installer execution module. In addition, the installer management module clears an uncompleted software upgrade task, for example, deletes a downloaded software version, or deletes breakpoint information of the software upgrade task.

S07: The installer execution module separately performs software version rollback on the M control units in response to the software version rollback request.

S08: The installer management module generates a software version upgrade resumption request based on the orchestration information of the M control units, and sends the upgrade resumption request to the installer execution module.

S09: The installer execution module separately continues to perform software version upgrade on the M control units in response to the upgrade resumption request.

S011: The installer management module clears the software upgrade task after the upgrade is completed, for example, deletes the breakpoint information of the software upgrade task.

S012: The installer management module interacts with an upgrade mode management module to exit an upgrade mode after the upgrade is completed. For example, after the upgrade is completed, the installer management module sends a request for exiting the upgrade mode to the upgrade mode management module, and the upgrade mode management module exits the upgrade mode in response to the request for exiting the upgrade mode.

Division of the units in the apparatus is merely division of logical functions. During actual implementation, all or some of the units may be integrated into one physical entity, or may be physically separated.

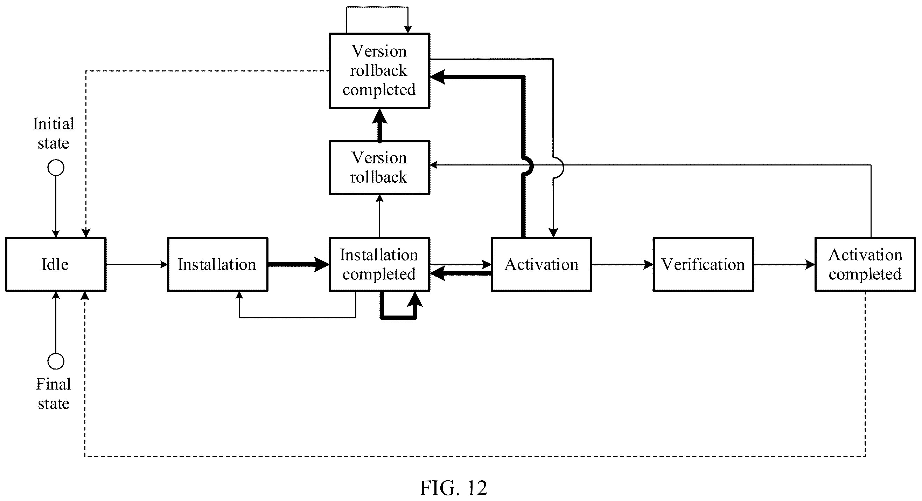

FIG. 12 is a diagram of a software upgrade state machine of a control unit according to an embodiment of this application. With reference to FIG. 12, when the control unit installs a software version, if the control apparatus sends a pause instruction, for example, calls a pause (pause) module: call pause (), the control unit changes from an installation state to an installation complete state. When the control unit receives the pause instruction in the installation complete state, a state of the control unit in the state machine remains unchanged. When the control unit activates the software version, if the control unit receives the pause instruction sent by the control apparatus, the control unit changes from an activation state to a version rollback complete state. When the control unit receives the pause instruction in a version rollback state, the control unit changes from the version rollback state to the version rollback complete state. In conclusion, when the control unit needs to pause upgrade of the software version, if the control unit is in an unstable state (for example, installation, activation, or version rollback), the control unit adjusts the state to a stable state (for example, installation complete, activation complete, or version rollback complete), to save an upgrade site, that is, obtain stable breakpoint information.

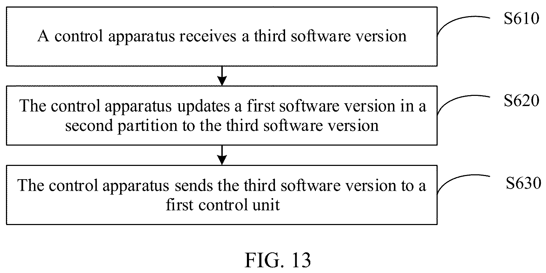

FIG. 13 is a schematic flowchart of software upgrade control method according to an embodiment of this application. The method may be executed by the control apparatus in any one of the foregoing embodiments. As shown in FIG. 13, the method includes the following steps.

S610: A control apparatus receives a third software version.

S620: The control apparatus updates a first software version in a second partition to the third software version.

S630: The control apparatus sends the third software version to a first control unit.

A specific implementation method of the software upgrade control method in this embodiment of this application is described in detail in the foregoing apparatus embodiment. For brevity, details are not described herein again.

An embodiment of this application further provides a computer-readable storage medium, configured to store a computer program.

In some embodiments, the computer-readable storage medium may be used in the control apparatus of the vehicle in embodiments of this application, and the computer program enables a computer to perform corresponding procedures in the methods in embodiments of this application. For brevity, details are not described herein again.

An embodiment of this application further provides a computer program product, including computer program instructions.

In some embodiments, the computer program product may be used in the control apparatus in embodiments of this application, and the computer program instructions enable a computer to perform corresponding procedures in the methods in embodiments of this application. For brevity, details are not described herein again.

Embodiments of this application further provide a computer program.

In some embodiments, the computer program may be applied to the control apparatus in embodiments of this application. When the computer program runs on a computer, the computer is enabled to perform corresponding procedures in the methods in embodiments of this application. For brevity, details are not described herein again.

An embodiment of this application further provides an intelligent vehicle.

In some embodiments, the vehicle includes the control apparatus in embodiments of this application. The control apparatus is configured to perform corresponding procedures in the methods in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A software upgrade system, comprising a control apparatus and M control units, wherein M is a positive integer, the M control units comprise a first control unit, the control apparatus comprises a first partition and a second partition, the first control unit comprises a first storage area, a second software version is deployed in the first partition, and a first software version is deployed in the second partition;
the control apparatus is configured to:
receive a third software version;
update the first software version in the second partition to the third software version; and
send the third software version to the first control unit; and
the first control unit is configured to:
update the second software version deployed in the first storage area to the third software version, wherein
the first software version, the second software version, and the third software version are different versions of software corresponding to the first control unit.

2. The software upgrade system according to claim 1, wherein when sending the third software version to the first control unit, the control apparatus is specifically configured to send the third software version and information about the first storage area to the first control unit.

3. The software upgrade system according to claim 2, wherein the first control unit further comprises a second storage area, and the first control unit is further configured to:
update the first software version deployed in the second storage area to the third software version; and
switch roles of the first storage area and the second storage area, wherein the roles comprise a primary storage area or a secondary storage area.

4. The software upgrade system according to claim 1 or 2, wherein after the sending the third software version to the first control unit,
the control apparatus is further configured to:
detect whether a trigger event exists, wherein the trigger event is used to trigger rollback of the third software version deployed in the first storage area to the second software version; and
send the second software version to the first control unit when the trigger event exists; and
the first control unit is further configured to:
receive the second software version; and
roll back the third software version deployed in the first storage area to the second software version.

5. The software upgrade system according to claim 3, wherein after the sending the third software version to the first control unit,
the control apparatus is further configured to:
detect whether a trigger event exists, wherein the trigger event is used to trigger rollback of the third software version deployed in the first storage area to the second software version; and
send indication information to the first control unit when the trigger event exists, wherein the indication information indicates to roll back the third software version deployed in the first storage area to the second software version; and
the first control unit is further configured to switch the roles of the first storage area and the second storage area.

6. The software upgrade system according to claim 4 or 5, wherein the trigger event comprises one of the following:
the third software version is abnormal;
upgrade is canceled; or
the third software version fails to be updated.

7. The software upgrade system according to claim 6, wherein the trigger event comprises that the third software version is abnormal, and when the control apparatus detects whether the trigger event exists, the control apparatus is specifically configured to:
detect whether the third software version belongs to a version set, wherein the version set comprises N matched software versions, and the N matched software versions are respectively software versions corresponding to N control units; or
when the N control units respectively run corresponding software, detect whether a control unit that runs abnormally exists in the N control units, wherein
the N control units comprise the first control unit, the N control units are coupled to each other, N is less than or equal to M, and N is an integer greater than 1.

8. The software upgrade system according to claim 7, wherein the control apparatus is further configured to:
obtain association information between the M control units; and
determine the N control units from the M control units based on the association information.

9. The software upgrade system according to claim 8, wherein the control apparatus is specifically configured to:
determine orchestration information of the M control units based on the association information, wherein the orchestration information indicates a sequence in which the M control units perform software version upgrade; and
send the third software version to the first control unit based on the orchestration information.

10. The software upgrade system according to claim 9, wherein the orchestration information further indicates the M control units to perform software version upgrade in a serial manner and/or a parallel manner.

11. The software upgrade system according to any one of claims 1 to 10, wherein the control apparatus is further configured to store a mapping relationship, wherein the mapping relationship indicates a correspondence between a partition of the control apparatus and a storage area of the first control unit.

12. The software upgrade system according to any one of claims 1 to 11, wherein the first partition is a logical partition or a physical partition; and/or the second partition is a logical partition or a physical partition; and
the physical partition is a physical storage area of a memory of the control apparatus, and the logical partition is a mapping area of the physical storage area of the memory.

13. The software upgrade system according to any one of claims 1 to 12, wherein the first storage area corresponds to a first image area, and a software version deployed in the first image area is the same as a software version deployed in the first storage area.

14. The software upgrade system according to claim 13, wherein the control apparatus is further configured to:
after the first control unit switches the roles of the first storage area and the second storage area, establish a correspondence between the first image partition and a primary storage area obtained through switching.

15. The software upgrade system according to claim 3 or 5, wherein the second storage area corresponds to a second image area, and a software version deployed in the second image area is the same as a software version deployed in the second storage area.

16. The software upgrade system according to claim 14, wherein the control apparatus is further configured to:
send a switching instruction to the first control unit when a data exception occurs in the first storage area, wherein the switching instruction instructs to switch the first image partition to the primary storage area; and
the first control unit is configured to switch the first image partition to the primary storage area according to the switching instruction.

17. The software upgrade system according to any one of claims 1 to 16, wherein the control apparatus is further configured to:
send a pause instruction to the first control unit, wherein the pause instruction instructs to pause a software upgrade task, and the software upgrade task is upgrading the second software version to the third software version; and
the first control unit is further configured to:
pause the software upgrade task according to the pause instruction, and save breakpoint information; and
send the breakpoint information to the control apparatus, wherein
the breakpoint information comprises at least one of the following: a task parameter, task progress, or orchestration information.

18. The software upgrade system according to any one of claims 1 to 17, wherein the control apparatus is further configured to:
detect whether a paused software upgrade task exists, wherein the software upgrade task is upgrading the second software version to the third software version;
obtain breakpoint information of the software upgrade task when the paused software upgrade task exists; and
send an upgrade continuing instruction to the first control unit based on the breakpoint information, wherein the upgrade continuing instruction instructs to continue to execute the software upgrade task; and
the first control unit is further configured to continue to execute the software upgrade task based on the breakpoint information and according to the upgrade continuing instruction.

19. A software upgrade control method, applied to a control apparatus, wherein the control apparatus comprises a first partition and a second partition, a second software version is deployed in the first partition, a first software version is deployed in the second partition, and the method comprises:
receiving a third software version;
updating the first software version in the second partition to the third software version; and
sending the third software version to a first control unit, wherein
the first software version, the second software version, and the third software version are different versions of software corresponding to the first control unit.

20. The method according to claim 19, wherein the sending the third software version to a first control unit comprises: sending the third software version and information about a first storage area to the first control unit, wherein the first control unit comprises the first storage area.

21. The method according to claim 19 or 20, wherein after the sending the third software version to a first control unit, the method further comprises:
detecting whether a trigger event exists, wherein the trigger event is used to trigger rollback of the third software version to the second software version; and
sending the second software version to the first control unit when the trigger event exists, or sending indication information to the first control unit, wherein the indication information indicates to roll back the third software version to the second software version.

22. The method according to claim 21, wherein the trigger event comprises one of the following:
the third software version is abnormal;
upgrade is canceled; or
the third software version fails to be updated.

23. The method according to claim 22, wherein the trigger event comprises that the third software version is abnormal, and the detecting whether a trigger event exists comprises:
detecting whether the third software version belongs to a version set, wherein the version set comprises N matched software versions, and the N matched software versions are respectively software versions corresponding to N control units; or
when the N control units respectively run corresponding software, detecting a control unit that runs abnormally in the N control units, wherein
the N control units comprise the first control unit, the N control units are coupled to each other, N is less than or equal to M, and both N and M are integers greater than 1.

24. The method according to claim 23, further comprising:
obtaining association information between M control units; and
determining the N control units from the M control units based on the association information.

25. The method according to claim 24, wherein the sending the third software version to a first control unit comprises:
determining orchestration information of the M control units based on the association information, wherein the orchestration information indicates a sequence in which the M control units perform software version upgrade; and
sending the third software version to the first control unit based on the orchestration information.

26. The method according to claim 25, wherein the orchestration information further indicates the M control units to perform software version upgrade in a serial manner and/or a parallel manner.

27. The method according to any one of claims 19 to 26, wherein the method further comprises:
storing a mapping relationship, wherein the mapping relationship indicates a correspondence between a partition of the control apparatus and a storage area of the first control unit.

28. The method according to any one of claims 19 to 27, wherein the first partition is a logical partition or a physical partition; and/or the second partition is a logical partition or a physical partition; and
the physical partition is a physical storage area of a memory of the control apparatus, and the logical partition is a mapping area of the physical storage area of the memory.

29. The method according to any one of claims 19 to 28, wherein the first storage area of the first control unit corresponds to a first image area, and a software version deployed in the first image area is the same as a software version deployed in the first storage area.

30. The method according to claim 29, wherein after the sending the third software version to a first control unit, the method further comprises:
establishing a correspondence between the first image partition and a primary storage area obtained through switching.

31. The method according to claim 29 or 30, wherein the method further comprises:
sending a switching instruction to the first control unit when a data exception occurs in the first storage area, wherein the switching instruction instructs to switch the first image partition to the primary storage area.

32. The method according to any one of claims 19 to 31, wherein the method further comprises:
sending a pause instruction to the first control unit, wherein the pause instruction instructs to pause a software upgrade task, and the software upgrade task is upgrading the second software version to the third software version.

33. The method according to claim 32, wherein the method further comprises:
obtaining breakpoint information of the first control unit, wherein the breakpoint information comprises at least one of the following: a task parameter, task progress, or orchestration information.

34. The method according to any one of claims 19 to 33, wherein the method further comprises:
detecting whether a paused software upgrade task exists, wherein the software upgrade task is upgrading the second software version to the third software version;
obtaining breakpoint information of the software upgrade task when the paused software upgrade task exists; and
sending an upgrade continuing instruction to the first control unit based on the breakpoint information, wherein the upgrade continuing instruction instructs to continue to execute the software upgrade task.

35. A control apparatus, comprising a module configured to perform the method according to any one of claims 19 to 34.

36. A vehicle, comprising a control apparatus, wherein the control apparatus comprises a first partition and a second partition, a second software version is deployed in the first partition, a first software version is deployed in the second partition, the control apparatus is configured to perform the method according to any one of claims 19 to 34 to control software upgrade of a first control unit, and the first software version and the second software version are different versions of software corresponding to the first control unit.

37. The vehicle according to claim 36, further comprising M control units, wherein M is a positive integer, and the M control units comprise the first control unit.

38. A chip, comprising a processor, configured to: invoke computer instructions from a memory and run the computer instructions, to enable a device in which the chip is installed to perform the method according to any one of claims 19 to 34.

39. A computer-readable storage medium, configured to store computer program instructions, wherein the computer program enables a computer to perform the method according to any one of claims 19 to 34.

40. A computer program product, comprising computer program instructions, wherein the computer program instructions enable a computer to perform the method according to any one of claims 19 to 34.
